# EUROPÄISCHE PATENTSCHRIFT

(11) **EP 0 663 167 B1**
(45) Veröffentlichungstag und Bekanntmachung des Hinweises auf die Patenterteilung: **04.06.1997**
(21) Anmeldenummer: 94119795.6
(22) Anmeldetag: 15.12.1994
(51) Int. Cl.: A47C 20/04

(54) **Anordnung für die Netzfreischaltung einer Steuereinrichtung**
Arrangement for the off-mains switching of a control device
Système pour le découplage d'une installation de commande par rapport au secteur

(30) Priorität: 12.01.1994 DE 4400657
(43) Veröffentlichungstag der Anmeldung: 19.07.1995
(73) Patentinhaber: SONETTA GmbH, D-51645 Gummersbach (DE)
(72) Erfinder: Becker, Kurt, D-51643 Gummersbach (DE)
(74) Vertreter: Pürckhauer, Rolf, Dipl.-Ing.

(56) Entgegenhaltungen:
- DE-A- 4 139 647
- DE-U- 9 212 599

## Beschreibung

Die Erfindung bezieht sich auf eine Anordnung für die Netzfreischaltung einer Steuereinrichtung, insbesondere zum Verstellen von Fuß- und Kopfteilen eines Lattenrostes von Schlaf- oder Liegemöbeln, wobei die Steuereinrichtung von einer netzgebundenen Spannungsquelle versorgt wird, mit einem Freischaltrelais, das mindestens einen Relaisschalter in der netzseitigen Stromzuführung aufweist, der sich bei nicht erregtem Freischaltrelais in AUS-Stellung befindet, sowie mit einer parallel zur netzgebundenen Spannungsquelle geschalteten Hilfsspannungsquelle, die über einen Schalter an den Steuereingang des Freischaltrelais legbar ist, wobei die Hilfsspannungsquelle ein zweiter Netztrafo ist.

Bei einer Anordnung, die beispielsweise aus der DE 41 39 647 A 1 bekannt ist, kann eine Trennung vom Netz während der Zeit erfolgen, in der keine Steuerfunktionen ausgeführt werden. Die Netzzuschaltung erfolgt, sobald ein Steuerbefehl gegeben wird. Ein Netzdauerbefehl wird auf diese Weise vermieden.

Aus DE-U-92 12 599 ist die Verwendung eines eine Hilfsspannung erzeugenden Trafos bekannt.

Es gibt Installationen, bei denen im Stromkreis eines Hauses oder Apartments oder von bestimmten Gebäudeteilen eine übergeordnete Netzfreischaltung vorgesehen ist, die im Verbraucherstromkreis über ein Relais den ganzen Stromkreis des 220V-Netzes abschaltet, wenn im Verbraucherstromkreis ein Strom von weniger als 10 mA fließt. Wenn ein Verbraucher wieder eingeschaltet wird, an dem bei abgeschaltetem Stromkreis eine Spannung von etwa 2-3 V Gleichstrom liegt, dann wird ein Relais der Netzfreischaltung erregt und schaltet den Hauptstromkreis (220 V) wieder ein.

Der Erfindung liegt die Aufgabe zugrunde, die gattungsgemäße Schaltungsanordnung so auszulegen, daß die Netzfreischaltung einer Steuereinrichtung auch in Kombination mit einer übergeordneten Netzfreischaltung funktioniert.

Diese Aufgabe wird erfindungsgemäß dadurch gelöst, daß in der Netzzuleitung des zweiten Trafos (T2) in Reihe mit diesem zwei Z-Dioden (ZD1, ZD2) gegeneinander geschaltet sind und daß zum Erregen des Freischaltrelais für eine zum Ansprechen einer übergeordneten Netzfreischaltung ausreichende Zeitspanne ein Elektrolytkondensator vorgesehen ist, der vom zweiten Trafo über eine Gleichrichterbrücke aufgeladen wird.

Der Elektrolytkondensator hat vorzugsweise eine Kapazität von 2200 µF.

Als Freischaltrelais kann auch ein bistabiles Relais verwendet werden, wodurch der Energieverbrauch des Freischaltrelais deutlich gesenkt werden kann.

Zweckmäßig hat das Freischaltrelais einen hohen Spulenwiderstand von mindestens 600 Ohm.

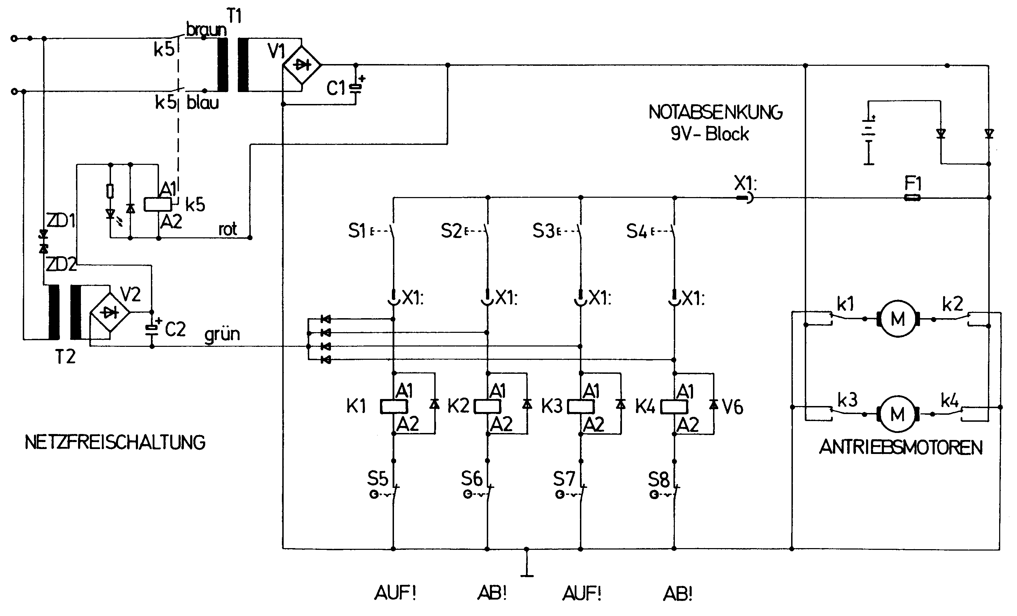

Die Zeichnung zeigt ein Ausführungsbeispiel der erfindungsgemäßen Schaltungsanordnung.

Die Steuereinrichtung im rechten Teil der Zeichnung dient zum Verstellen von Kopf- und Fußteil eines Bettes oder einer Krankenliege und ist an sich bekannt. Die Stromversorgung erfolgt über einen Netztrafo T1 und eine Gleichrichterbrücke V1, der ein Glättungskondensator C1 zugeordnet ist.

Zum Auf- und Abbewegen von Kopf- oder Fußteil dienen Schalter S1 bis S4, durch die entsprechende Relais K1 bis K4 mit ihren Kontakten k1 bis k4 erregt werden,durch die die jeweilige Drehrichtung von Gleichstrom-Antriebsmotoren M bestimmt wird.

Für den Fall eines totalen Netzausfalls ist eine Notabsenkung mit einer Batterie (9 V-Block) vorgesehen.

Der linke Teil der Zeichnung zeigt die Netzfreischaltung, die sich in einem Steckeradapter befindet. Diese weist als Hilfsspannungsquelle einen zweiten Netztrafo T2 mit einer Gleichrichterbrücke V2 und einem Elektrolytkondensator C2 mit einer Kapazität von etwa 2200 µF auf. In der Netzzuleitung zum zweiten Netztrafo T2 sind zwei in Reihe mit diesem und gegeneinander geschalteten Z-Dioden ZD1 und ZD2 vorgesehen. Diese verhindern, daß eine übergeordnete Netzfreischaltung deshalb wieder einschaltet, weil der zweite Netztrafo T2 im Gleichstromkreis wie ein kleiner Widerstand, d.h. wie ein kleiner Verbraucher wirkt und somit von der übergeordneten Netzfreischaltung als Verbraucher "erkannt" wurde. Das hätte zur Folge, daß die übergeordnete Netzfreischaltung ständig hin und her, d.h. ein- und ausschalten würde. Die Z-Dioden ZD1 und ZD2 verhalten sich wie große Widerstände, wenn von der übergeordneten Netzfreischaltung eine kleine Gleichspannung angelegt wird, d.h. die Netzfreischaltung "sieht" mit ihrem Gleichspannungstest den zweiten Netztrafo T2 nicht mehr.

Wenn einmal vom Netz abgeschaltet wurde, dann wird ein ausreichend großer Energiespeicher benötigt, um ein Freischaltrelais K5 wieder anziehen zu lassen und den Haupt-Netztrafo T1 wieder zu aktivieren. Dazu dient der Elektrolytkondensator C2, der einen geringen Leckstrom hat. Seine Kapazität reicht aus, um das Freischaltrelais K5 etwa 1 bis 2 Sekunden lang zu erregen und über dessen Kontakte k5 die Primärwicklung des Netztrafos T1 an die Netzzuleitung zu legen, so daß die übergeordnete Netzfreischaltung (nicht dargestellt) den Trafo T1 als Verbraucher "erkennt" und die Netzspannung von 220 V wieder einschaltet.

Nach langerer Zeit (viele Stunden oder Tage) kann sich der Elektrolytkondensator C2 allerdings so weit entladen haben, daß der Stellantrieb die übergeordnete Netzfreischaltung nicht mehr aktivieren kann. Dann ist es erforderlich, einen anderen mit der übergeordneten Netzfreischaltung verbundenen Verbraucher kurzzeitig einzuschalten, z.B. ein Nachttischlämpchen, um den Stellantrieb betätigen zu können. Da dies ohnehin häufig geschieht, ist darin kein nennenswerter Nachteil zu sehen. Einen günstigen Einfluß auf die Selbstentladung des Elektrolytkondensators C2, d.h. eine Verzögerung dieser Selbstentladung, wird erreicht, wenn der Elektrolytkondensator von Haus aus einen niedrigen Leckstrom hat und wenn die Z-Dioden ZD1, ZD2 kleine Sperrströme haben.

Denkbar ist auch die Verwendung eines bistabilen Relais als Freischaltrelais mit vorgeschaltetem Relais-IC, womit das erforderliche monostabile Schaltverhalten simuliert wird. Der Energieverbrauch des Freischaltrelais könnte dadurch, wie eingangs bereits erwähnt, deutlich gesenkt werden.

## Patentansprüche

1. Anordnung für die Netzfreischaltung einer Steuereinrichtung, insbesondere zum Verstellen von Fuß- und Kopfteilen eines Lattenrostes von Schlaf- oder Liegemöbeln, wobei die Steuereinrichtung von einer netzgebundenen Spannungsquelle (T1) versorgt wird, mit einem Freischaltrelais (K5), das mindestens einen Relaisschalter (K5) in der netzseitigen Stromzuführung aufweist, der sich bei nicht erregtem Freischaltrelais (K5) in AUS-Stellung befindet, sowie mit einer parallel zur netzgebundenen Spannungsquelle geschalteten Hilfsspannungsquelle, die über einen Schalter an den Steuereingang des Freischaltrelais (K5) legbar ist, wobei die Hilfsspannungsquelle ein zweiter Netztrafo (T2) ist, dadurch gekennzeichnet, daß in der Netzzuleitung des zweiten Trafos (T2) in Reihe mit diesem zwei Z-Dioden (ZD1, ZD2) gegeneinander geschaltet sind und daß zum Erregen des Freischaltrelais (K5) für eine zum Ansprechen einer übergeordneten Netzfreischaltung ausreichende Zeitspanne ein Elektrolytkondensator (C2) vorgesehen ist, der vom zweiten Netztrafo (T2) über eine Gleichrichterbrücke (V2) aufgeladen wird.

2. Anordnung nach Anspruch 1, dadurch gekennzeichnet, daß der zweite Netztrafo (T2) eine Ruhestromaufnahme von weniger als 10 mA aufweist.

3. Anordnung nach Anspruch 1 oder 2, dadurch gekennzeichnet daß der Elektrolytkondensator (C2) eine Kapazität von etwa 2200 µF hat.

4. Anordnung nach einem der Ansprüche 1 bis 3, dadurch gekennzeichnet, daß als Freischaltrelais (K5) ein bistabiles Relais verwendet wird.

5. Anordnung nach einem der Ansprüche 1 bis 4, dadurch gekennzeichnet, daß das Freischaltrelais (K5) einen hohen Spulenwiderstand hat.

6. Anordnung nach Anspruch 5, dadurch gekennzeichnet, daß der Spulenwiderstand des Freischaltrelais (K5) mindestens 600 Ohm beträgt.

## Claims

1. Arrangement for off-mains switching of a control device, particularly for adjusting foot and head portions of sleeping or reclining furniture, the control device being supplied from a mains-connected voltage source (T1), with a clearing relay (K5) having at least one relay switch (K5) in the mains-side current supply, which is in the OFF position when the clearing relay (K5) is not energised, and with a secondary voltage source incorporated in parallel with the mains-connected voltage source, said secondary source being connectable by a switch with the control input of the clearing relay (K5), the secondary voltage source being a second mains transformer (T2), characterised in that there are incorporated in the mains supply line of the second transformer (T2) in series therewith, two Z-diodes (ZD1, ZD2) and in that, in order to energise the clearing relay (K5) for a period of time adequate for response of a superimposed clearing circuit, there is provided an electrolyte condenser (C2), which is charged by the second mains transformer (T2) via a rectifier bridge (V2).

2. Arrangement according to claim 1, characterised in that the second mains transformer (T2) has a static current uptake of less than 10 mA.

3. Arrangement according to claim 1 or 2, characterised in that the electrolyte condenser (C2) has a capacitance of about 2200 µF.

4. Arrangement according to one of claims 1 to 3, characterised in that a bistable relay is used as a clearing relay (K5).

5. Arrangement according to one of claims 1 to 4, characterised in that the clearing relay (K5) has a high coil resistance.

6. Arrangement according to claim 5, characterised in that the coil resistance of the clearing relay K5) comes to at least 600 Ohms.

## Revendications

1. Dispositif pour la déconnexion par rapport à un réseau d'un dispositif de commande, notamment pour le réglage des parties de pieds et de tête d'un lattis de meuble de couchage ou de repos, le dispositif de commande étant alimenté par une source (T1) de tension liée au réseau, comportant un relais (K5) de déconnexion, qui comporte au moins un interrupteur (K5) de relais dans l'alimentation en courant du côté réseau, lequel interrupteur se trouve en position ouverte lorsque le relais (K5) de déconnexion n'est pas excité, ainsi qu'une source de tension auxiliaire, qui est branchée en parallèle avec la source de tension liée au reseau et qui peut être reliée par l'intermédiaire d'un interrupteur à l'entrée de commande du relais (K5) de déconnexion, la source de tension auxiliaire étant un second transformateur (T2) de réseau, caractérisé en ce qu'il est branché dans le conducteur d'amenée du réseau du second transformateur (T2), en série avec celui-ci, deux diodes Z (ZD1, ZD2) en sens inverse l'une de l'autre et il est prévu un condensateur (C2) électrolytique qui est chargé par le second transformateur (T2) de réseau par l'intermédiaire d'un pont (V2) redresseur, pour l'excitation du relais (K5) de déconnexion pour un laps de temps suffisant à la réaction d'un circuit de déconnexion par rapport au réseau d'ordre hiérarchique supérieur.

2. Dispositif suivant la revendication 1, caractérisé en ce que le second transformateur (T2) de réseau a une consommation de courant de repos de moins de 10 mA.

3. Dispositif suivant la revendication 1 ou 2, caractérisé en ce que le condensateur électrolytique (C2) a une capacité d'environ 2200 µF.

4. Dispositif suivant l'une des revendications 1 à 3, caractérisé en ce que l'on utilise comme relais (K5) de déconnexion un relais bistable.

5. Dispositif suivant l'une des revendications 1 à 4, caractérisé en ce que le relais (K5) de déconnexion a une grande résistance de bobine.

6. Dispositif suivant la revendication 5, caractérisé en ce que la résistance de bobine du relais (K5) de déconnexion représente au moins 600 Ohm.
